# EUROPEAN PATENT SPECIFICATION

(11) **EP 4 378 769 B1**
(45) Date of publication and mention of the grant of the patent: **21.05.2025**
(21) Application number: 22755308.8
(22) Date of filing: 28.07.2022
(51) Int. Cl.: B60T 8/17, B60T 7/22, B60T 8/1766

(54) **CONTROLLER FOR A SADDLED VEHICLE AND CONTROL METHOD FOR MANEUVERING A SADDLED VEHICLE**
STEUERGERÄT FÜR EIN SATTELFAHRZEUG UND STEUERUNGSVERFAHREN ZUM MANÖVRIEREN EINES SATTELFAHRZEUGS
DISPOSITIF DE COMMANDE ET PROCÉDÉ DE COMMANDE POUR MANOEUVRER UN VÉHICULE À SELLE

(30) Priority: 29.07.2021 JP 2021123778
(43) Date of publication of application: 05.06.2024
(73) Proprietor: Robert Bosch GmbH, 70442 Stuttgart (DE)
(72) Inventor: SATO, Akira, Yokohama-shi, Kanagawa 224-8501 (JP)
(86) International application number: PCT/IB2022/056999
(87) International publication number: WO 2023/007428

(56) References cited:
- EP-A1- 2 360 075
- EP-A1- 3 608 180
- EP-A1- 3 663 144
- EP-A1- 3 828 044
- EP-A1- 3 842 308

## Description

### Technical Field

The present disclosure relates to a controller and a control method capable of properly improving safety of a saddled vehicle.

### Background Art

As a conventional technique for a saddled vehicle, one for improving safety is known.

For example, JP 2009-116882 A describes a driver support system which warns a driver of a motorcycle that the driver is improperly approaching an obstacle based on information detected by a sensor device detecting an obstacle in a traveling direction or substantially a traveling direction.

### Citation List

### Patent Literature

PTL 1: JP 2009-116882 A
PTL 2: EP 2 360 075 A1
PTL 3: EP 3 608 180 A1
PTL 4: EP 3 842 308 A1
PTL 5: EP 3663 144 A1
PTL 6: EP 3 828 044 A1

### Summary of Invention

### Technical Issues

Incidentally, as a technique of improving safety of a vehicle, there is known a driving support mode capable of amplifying a braking force generated in a vehicle while a driver performs a braking operation. Here, even in a saddled vehicle, it is conceivable to use the above-described driving support mode in order to improve safety. In this case, it is desirable to properly improve the safety of the saddled vehicle.

The present invention addresses the above-described issues. Thus, it is an objective of the present invention to provide a controller and a control method that improve safety of saddled vehicle appropriately.

### Solution to the Issues

As one aspect of the present invention, a controller maneuvers a saddled vehicle is provided, as defined by independent claim 1. The saddled vehicle includes a braking operation unit and a detector. The braking operation unit is operated by a rider. The detector detects a state quantity of the braking operation unit during a service braking. The controller includes a determination unit and an execution unit. The determination unit determines, based on an output from the detector, whether the braking operation unit is in operation. The execution unit executes a driving support mode when the determination unit determines that the braking operation unit is in operation. The driving support mode is a mode in which a braking force generated in the saddled vehicle is amplified. The execution unit, in the driving support mode: amplifies the braking force based on a surrounding environment information that is information about environment around the saddled vehicle; and changes, based on a degree of change in the output from the detector, a degree of reduction in the braking force at the end of the amplification of the braking force generated in the saddled vehicle.

As one aspect of the present invention, a control method maneuvers a saddled vehicle including a braking operation unit and a detector is provided as defined by independent claim 11. The braking operation unit is operated by a rider. The detector detects a state quantity of the braking operation unit during a service braking. The control method includes: determining, using a determination unit of a controller, whether the braking operation unit is in operation, based on an output from the detector; and executing, using an execution unit of the controller, a driving support mode when the determination unit determines that the braking operation unit is in operation, the driving support mode in which a braking force generated in the saddled vehicle is amplified. The execution unit, in the driving support mode: amplifies the braking force based on a surrounding environment information that is information about environment around the saddled vehicle; and changes, based on a degree of change in the output from the detector, a degree of reduction in the braking force at the end of the amplification of the braking force generated in the saddled vehicle. Advantageous Effects of Invention

According to the controller and the control method, a determination unit determines whether a braking operation unit is in operation, based on an output from a detector configured to detect a state quantity of the braking operation unit. An execution unit executes a driving support mode, in which a braking force generated in the saddled vehicle is amplified, when the determination unit determines that the braking operation unit is in operation. The execution unit, in the driving support mode: amplifies the braking force based on a surrounding environment information that is information about environment around the saddled vehicle; and changes, based on a degree of change in the output from the detector, a degree of reduction in the braking force at the end of the amplification of the braking force generated in the saddled vehicle. Accordingly, it is possible to suppress the braking force generated in the saddled vehicle from decreasing to a degree that greatly deviates from the rider's intension at the end of the amplification of the braking force generated in the saddled vehicle. Therefore, it is possible to properly improve the safety of the saddled vehicle.

### Brief Description of Drawings

Fig. 1 is a schematic diagram showing a schematic configuration of a saddled vehicle according to an embodiment of the present invention.
Fig. 2 is a schematic diagram showing a schematic configuration of a brake system according to the embodiment of the present invention.
Fig. 3 is a block diagram showing an example of a function configuration of a controller according to the embodiment of the present invention.
Fig. 4 is a schematic diagram showing an example of a relationship between a braking force in a normal state corresponding to a braking operation and a braking force generated in the saddled vehicle in a driving support mode according to the embodiment of the present invention.
Fig. 5 is a flowchart showing an example of an overall flow of a process for the driving support mode executed by the controller according to the embodiment of the present invention.
Fig. 6 is a flowchart showing an example of a flow of an ending process of the driving support mode executed by the controller according to the embodiment of the present invention.

### Description of Embodiments

Hereinafter, a controller according to the present invention will be described with reference to the drawings.

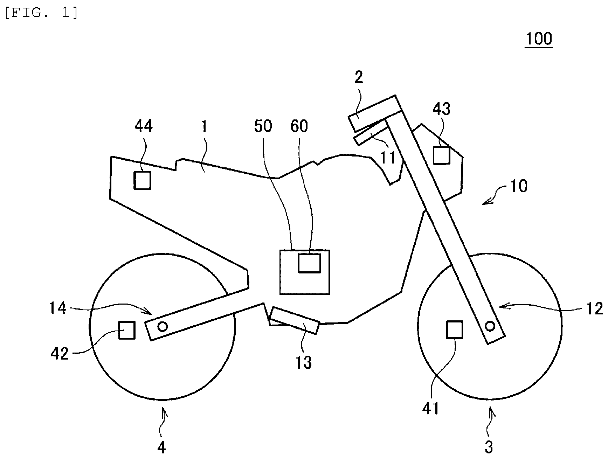

Additionally, hereinafter, although a controller used for a two-wheeled motorcycle is described (see a saddled vehicle 100 in Fig. 1), a vehicle to be controlled by the controller according to the present invention may be a saddled vehicle or may be a saddled vehicle other than the two-wheeled motorcycle. The saddled vehicle means a vehicle on which a rider straddles. The saddled vehicle includes, for example, motorcycles (auto bicycle, auto tribicycle), bicycles, buggies, and the like. Motorcycles include vehicles powered by engines, vehicles powered by electric motors, and the like. Motorcycles include, for example, motorcycles, scooters, electric scooters, and the like. Bicycle means a vehicle that can be propelled on a road by a rider's pedaling force applied to a pedal. Bicycles include ordinary bicycles, electrically assisted bicycles, electric bicycles, and the like.

Further, the configuration and operation described below are examples, and the controller and control method according to the present invention are not limited to such configurations and operations.

Further, hereinafter, the same or similar explanations are properly simplified or omitted. Further, in each drawing, the same or similar members or parts are omitted or given the same reference numerals. Further, the illustration of the fine structure is simplified or omitted as appropriate.

### <Configuration of saddled vehicle>

Referring to Figs. 1 to 3, a configuration of the saddled vehicle 100 according to the embodiment of the present invention will be described.

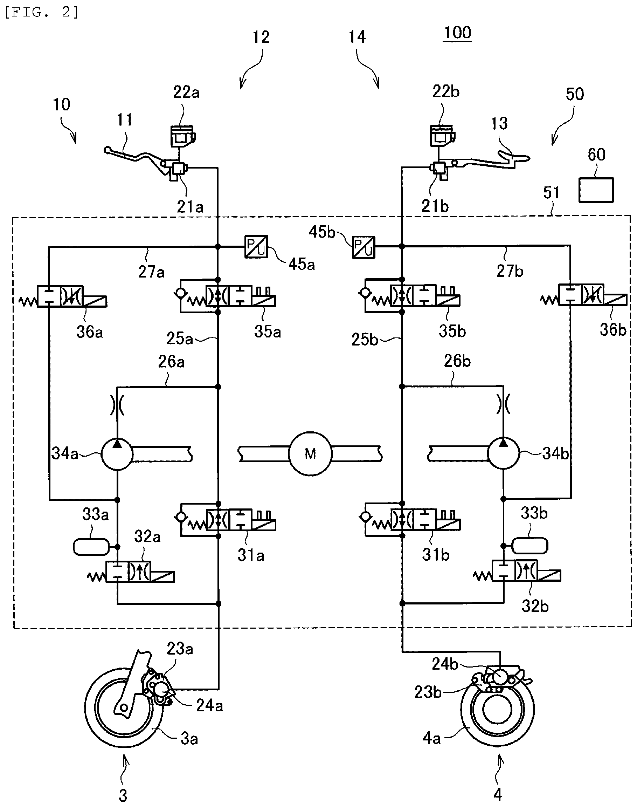

Fig. 1 is a schematic diagram showing a schematic configuration of the saddled vehicle 100. Fig. 2 is a schematic diagram showing a schematic configuration of a brake system 10.

The saddled vehicle 100 is a two-wheeled motorcycle corresponding to an example of the saddled vehicle according to the present invention. The saddled vehicle 100 includes, as shown in Figs. 1 and 2, a body 1, a handle 2 which is rotatably held to the body 1, a front wheel 3 which is rotatably held to the body 1 together with the handle 2, a rear wheel 4 which is rotatably held to the body 1, the brake system 10, a hydraulic pressure control unit 50 which is provided to the brake system 10, and a controller (ECU) 60 which is provided to the hydraulic pressure control unit 50. Further, the saddled vehicle 100 is provided with a front wheel speed sensor 41, a rear wheel speed sensor 42, a surrounding environment sensor 43, an inertia measuring device 44, a first master cylinder pressure sensor 45a (see Fig. 2), and a second master cylinder pressure sensor 45b (see Fig. 2) as sensors. Additionally, the saddled vehicle 100 includes a drive source such as an engine or an electric motor, and travels using the power output from the drive source.

The brake system 10 includes, as shown in Figs. 1 and 2, a first braking operation unit 11, a front wheel brake mechanism 12 which brakes the front wheel 3 in synchronization with at least the first braking operation unit 11, a second braking operation unit 13, and a rear wheel brake mechanism 14 which brakes the rear wheel 4 in synchronization with at least the second braking operation unit 13. Further, the brake system 10 includes the hydraulic pressure control unit 50 and a part of the front wheel brake mechanism 12 and a part of the rear wheel brake mechanism 14 are included in the hydraulic pressure control unit 50. The hydraulic pressure control unit 50 is a unit having a function of controlling a braking force generated on the front wheel 3 by the front wheel brake mechanism 12 and a braking force generated on the rear wheel 4 by the rear wheel brake mechanism 14.

The first braking operation unit 11 is provided to the handle 2 and is operated (i.e., is in operation) by the rider's hand. The first braking operation unit 11 is, for example, a brake lever. The second braking operation unit 13 is provided to the lower portion of the body 1 and is in operation by the rider's foot. The second braking operation unit 13 is, for example, a brake pedal. However, both the first braking operation unit 11 and the second braking operation unit 13 may be brake levers operated by the rider's hand like a braking operation unit of a scooter or the like.

The front wheel brake mechanism 12 includes a first master cylinder 21a which is provided to the first braking operation unit 11, a first reservoir 22a which is provided to the first master cylinder 21a, a first brake caliper 23a which is held to the body 1 and includes a brake pad (not shown), a first wheel cylinder 24a which is provided to the first brake caliper 23a, a main flow path 25a which circulates a braking liquid of the first master cylinder 21a to the first wheel cylinder 24a, a sub-flow path 26a which releases the braking liquid of the first wheel cylinder 24a, and a supply flow path 27a which supplies the braking liquid of the first master cylinder 21a to the sub-flow path 26a.

The main flow path 25a is provided with an inlet valve (EV) 31a. The sub-flow path 26a bypasses between the side of the first wheel cylinder 24a and the side of the first master cylinder 21a with respect to the inlet valve 31a in the main flow path 25a. An outlet valve (AV) 32a, an accumulator 33a, and a pump 34a are provided to the sub-flow path 26a in order from the upstream side. A first valve (USV) 35a is provided between positions in which the end on the side of the first master cylinder 21a and the downstream end of the sub-flow path 26a are connected to the main flow path 25a. The supply flow path 27a communicates between the first master cylinder 21a and the suction side of the pump 34a in the sub-flow path 26a. The supply flow path 27a is provided with a second valve (HSV) 36a.

The rear wheel brake mechanism 14 includes a second master cylinder 21b which is provided to the second braking operation unit 13, a second reservoir 22b which is provided to the second master cylinder 21b, a second brake caliper 23b which is held to the body 1 and includes a brake pad (not shown), a second wheel cylinder 24b which is provided to the second brake caliper 23b, a main flow path 25b which circulates a braking liquid of the second master cylinder 21b to the second wheel cylinder 24b, a sub-flow path 26b which releases the braking liquid of the second wheel cylinder 24b, and a supply flow path 27b which supplies the braking liquid of the second master cylinder 21b to the sub-flow path 26b.

The main flow path 25b is provided with an inlet valve (EV) 31b. The sub-flow path 26b bypasses between the side of the second wheel cylinder 24b and the side of the second master cylinder 21b with respect to the inlet valve 31b in the main flow path 25b. An outlet valve (AV) 32b, an accumulator 33b, and a pump 34b are provided to the sub-flow path 26b in order from the upstream side. A first valve (USV) 35b is provided between positions in which the end on the side of the second master cylinder 21b and the downstream end of the sub-flow path 26b are connected to the main flow path 25b. The supply flow path 27b communicates between the second master cylinder 21b and the suction side of the pump 34b in the sub-flow path 26b. The supply flow path 27b is provided with a second valve (HSV) 36b.

In the brake system 10, the first wheel cylinder 24a is a wheel cylinder of the front wheel 3. The second wheel cylinder 24b is a wheel cylinder of the rear wheel 4. Hereinafter, the pressure of the braking liquid of the wheel cylinder is referred to as the wheel cylinder pressure. The first braking operation unit 11 is a braking operation unit which changes a first wheel cylinder pressure corresponding to the pressure of the braking liquid of the first wheel cylinder 24a. The second braking operation unit 13 is a braking operation unit which changes a second wheel cylinder pressure corresponding to the pressure of the braking liquid of the second wheel cylinder 24b. The first master cylinder 21a is a master cylinder which is provided to the first braking operation unit 11. The second master cylinder 21b is a master cylinder which is provided to the second braking operation unit 13. Hereinafter, the pressure of the braking liquid of the master cylinder is referred to as a master cylinder pressure.

Additionally, hereinafter, the main flow path 25a and the main flow path 25b are simply referred to as a main flow path 25 when they are not particularly distinguished from each other. The sub-flow path 26a and the sub-flow path 26b are simply referred to as a sub-flow path 26 when they are not particularly distinguished from each other. The supply flow path 27a and the supply flow path 27b are simply referred to as a supply flow path 27 when they are not particularly distinguished from each other. The inlet valve 31a and the inlet valve 31b are simply referred to as an inlet valve 31 when they are not particularly distinguished from each other. The outlet valve 32a and the outlet valve 32b are simply referred to as an outlet valve 32 when they are not particularly distinguished from each other. The accumulator 33a and the accumulator 33b are simply referred to as an accumulator 33 when they are not particularly distinguished from each other. The pump 34a and the pump 34b are simply referred to as a pump 34 when they are not particularly distinguished from each other. The first valve 35a and the first valve 35b are simply referred to as a first valve 35 when they are not particularly distinguished from each other. The second valve 36a and the second valve 36b are simply referred to as a second valve 36 when they are not particularly distinguished from each other.

The inlet valve 31 is, for example, an electromagnetic valve which is opened in a non-energized state and is closed in an energized state. The outlet valve 32 is, for example, an electromagnetic valve which is closed in a non-energized state and is opened in an energized state. The first valve 35 is, for example, an electromagnetic valve which is opened in a non-energized state and is closed in an energized state. The second valve 36 is, for example, an electromagnetic valve which is closed in a non-energized state and is opened in an energized state.

The hydraulic pressure control unit 50 includes components which include the inlet valve 31, the outlet valve 32, the accumulator 33, the pump 34, the first valve 35, and the second valve 36 and control the brake hydraulic pressure, a base body 51 which is provided with such components and forms a flow path constituting the main flow path 25, the sub-flow path 26, and the supply flow path 27 therein, and the controller 60.

Additionally, the base body 51 may be formed by one member or may be formed by a plurality of members. Further, when the base body 51 is formed by a plurality of members, each component may be provided separately in different members.

The operation of the components of the hydraulic pressure control unit 50 is controlled by the controller 60. Accordingly, the braking force generated in the front wheel 3 by the front wheel brake mechanism 12 and the braking force generated in the rear wheel 4 by the rear wheel brake mechanism 14 are controlled.

In a normal state (that is, when it is set to generate a braking force in the wheel according to the braking operation by the rider), the controller 60 opens the inlet valve 31, closes the outlet valve 32, opens the first valve 35, and closes the second valve 36. In that state, when the first braking operation unit 11 is in operation, a piston (not shown) of the first master cylinder 21a is pressed in to increase the first wheel cylinder pressure of the first wheel cylinder 24a in the front wheel brake mechanism 12 and a brake pad (not shown) of the first brake caliper 23a is pressed against a rotor 3a of the front wheel 3 to generate a braking force in the front wheel 3. Further, when the second braking operation unit 13 is in operation, a piston (not shown) of the second master cylinder 21b is pressed in to increase the second wheel cylinder pressure of the second wheel cylinder 24b in the rear wheel brake mechanism 14 and a brake pad (not shown) of the second brake caliper 23b is pressed against a rotor 4a of the rear wheel 4 to generate a braking force in the rear wheel 4.

The front wheel speed sensor 41 is a wheel speed sensor that detects the wheel speed of the front wheel 3 (for example, the number of rotations [rpm] per unit time or the distance traveled [km/h] per unit time of the front wheel 3) and outputs the detection result. The front wheel speed sensor 41 may detect other physical quantities that can be substantially converted into the wheel speed of the front wheel 3. The front wheel speed sensor 41 is provided to the front wheel 3.

The rear wheel speed sensor 42 is a wheel speed sensor that detects the wheel speed of the rear wheel 4 (for example, the number of rotations [rpm] per unit time or the distance traveled [km/h] per unit time of the rear wheel 4) and outputs the detection result. The rear wheel speed sensor 42 may detect other physical quantities that can be substantially converted into the wheel speed of the rear wheel 4. The rear wheel speed sensor 42 is provided to the rear wheel 4.

The surrounding environment sensor 43 detects a surrounding environment information about the environment around the saddled vehicle 100. For example, the surrounding environment sensor 43 is provided to the front part of the body of the saddled vehicle 100 and detects surrounding environment information in front of the saddled vehicle 100. The surrounding environment information detected by the surrounding environment sensor 43 is output to the controller 60.

The surrounding environment information detected by the surrounding environment sensor 43 may be information related to the distance or orientation to a subject located around the saddled vehicle 100 (for example, relative position, relative distance, relative speed, relative acceleration, etc.) and a feature of the subject located around the saddled vehicle 100 (for example, the type of the subject, the shape of the subject itself, the mark attached to the subject, etc.). The surrounding environment sensor 43 is, for example, a radar, a Lidar sensor, an ultrasonic sensor, a camera, or the like.

Additionally, the surrounding environment information can also be detected by the surrounding environment sensor mounted to the other vehicle or the infrastructure equipment. That is, the controller 60 can also acquire the surrounding environment information via wireless communication with the other vehicle or infrastructure equipment.

The inertia measuring device 44 includes a three-axis gyro sensor and a three-direction acceleration sensor, and detects the posture of the saddled vehicle 100. The inertia measuring device 44 is provided to, for example, the body of the saddled vehicle 100. For example, the inertia measuring device 44 detects the lean angle, pitch angle, and yaw angle of the saddled vehicle 100, and outputs the detection result. The inertia measuring device 44 may detect other physical quantities that can be substantially converted into the lean angle, pitch angle, and yaw angle of the saddled vehicle 100. The inertia measuring device 44 may include only a part of the three-axis gyro sensor and the three-direction acceleration sensor.

The first master cylinder pressure sensor 45a detects a first master cylinder pressure which is a pressure of the braking liquid of the first master cylinder 21a and outputs the detection result. The first master cylinder pressure sensor 45a may detect other physical quantities that can be substantially converted into the first master cylinder pressure.

The second master cylinder pressure sensor 45b detects a second master cylinder pressure which is a pressure of the braking liquid of the second master cylinder 21b and outputs the detection result. The second master cylinder pressure sensor 45b may detect other physical quantities that can be substantially converted into the second master cylinder pressure.

The first master cylinder pressure sensor 45a and the second master cylinder pressure sensor 45b correspond to an example of the detector according to the present invention that detects the state quantity of the braking operation unit operated by the rider during a service braking. The state quantity of the braking operation unit is an amount indicating the state such as the displacement amount of the braking operation unit. The first master cylinder pressure sensor 45a detects the first master cylinder pressure of the first master cylinder 21a as the state quantity of the first braking operation unit 11 during the service braking. The second master cylinder pressure sensor 45b detects the second master cylinder pressure of the second master cylinder 21b as the state quantity of the second braking operation unit 13 during the service braking.

The controller 60 maneuvers the saddled vehicle 100. For example, a part or all of the controller 60 is composed of a microcomputer, a microprocessor unit, and the like. Further, for example, a part or all of the controller 60 may be configured by an updatable device such as firmware or may be a program module or the like executed by a command from a CPU or the like. The controller 60 may be, for example, one or may be divided into a plurality of controllers 60.

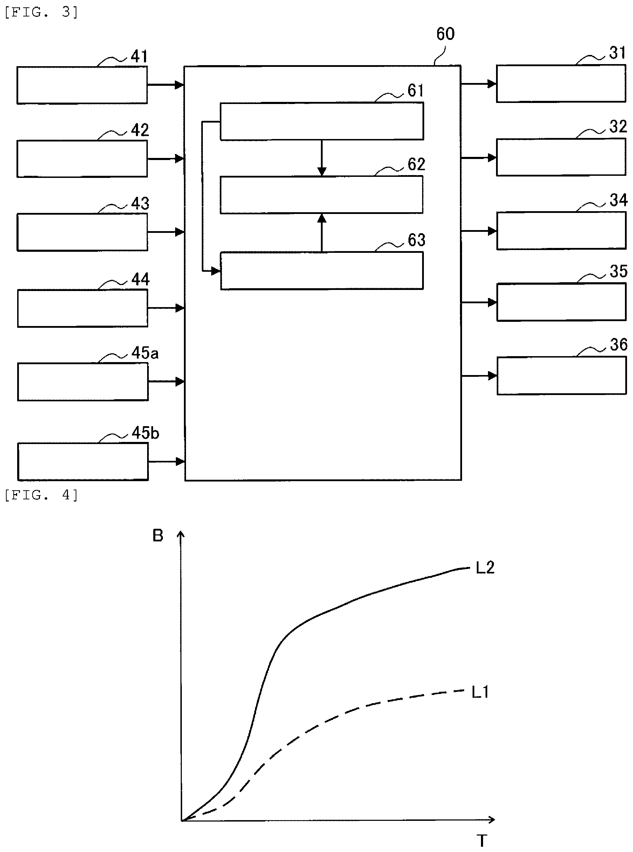

The controller 60 includes, as shown in Fig. 3, for example, an acquisition unit 61, an execution unit 62, and a determination unit 63.

The acquisition unit 61 acquires information from each device mounted to the saddled vehicle 100 and outputs the information to the execution unit 62 and the determination unit 63. For example, the acquisition unit 61 acquires information from the front wheel speed sensor 41, the rear wheel speed sensor 42, the surrounding environment sensor 43, the inertia measuring device 44, the first master cylinder pressure sensor 45a, and the second master cylinder pressure sensor 45b. In addition, in this specification, the acquisition of information may include extraction or generation of information.

The execution unit 62 executes braking control for controlling the braking force generated in the saddled vehicle 100 in order to maneuver the saddled vehicle 100. Specifically, the execution unit 62 controls the operation of each component of the hydraulic pressure control unit 50 of the brake system 10 in the braking control.

As described above, in a normal state, the execution unit 62 controls the operation of each component of the hydraulic pressure control unit 50 so that the braking force according to the rider's braking operation is generated in the vehicle wheel. On the other hand in a specific case, the execution unit 62 executes braking control different from the normal state.

For example, the execution unit 62 executes anti-lock brake control when the wheels are locked or may be locked. In the anti-lock brake control, the braking force generated in the wheels is adjusted to a braking force that can avoid locking.

When the anti-lock brake control is activated, the execution unit 62 drives the pump 34 while the execution unit 62 closes the inlet valve 31, opens the outlet valve 32, opens the first valve 35, and closes the second valve 36. Accordingly, the execution unit 62 reduces the braking force generated in the vehicle wheel by reducing the wheel cylinder pressure. Then, the execution unit 62 closes both the inlet valve 31 and the outlet valve 32 from the above state to maintain the wheel cylinder pressure and keep the braking force generated in the vehicle wheel. Then, the execution unit 62 opens the inlet valve 31 and closes the outlet valve 32 to increase the wheel cylinder pressure and increase the braking force generated in the vehicle wheel.

When the anti-lock brake control is activated, as described above, the braking force decreasing control for decreasing the braking force generated in the vehicle wheel, the braking force keeping control for keeping the braking force generated in the vehicle wheel, and the braking force increasing control for increasing the braking force generated in the vehicle wheel are repeated in this order.

Here, the execution unit 62 executes the driving support mode capable of amplifying the braking force generated in the saddled vehicle 100 in a state in which the rider of the saddled vehicle 100 performs the braking operation (that is, the operation of the braking operation unit). The amplification of the braking force generated in the saddled vehicle 100 means that the braking force generated in the saddled vehicle 100 becomes larger than the normal braking force according to the braking operation. Hereinafter, the driving support mode capable of amplifying the braking force generated in the saddled vehicle 100 is simply referred to as the driving support mode.

In the driving support mode, the execution unit 62 amplifies the braking force generated in the saddled vehicle 100 based on the surrounding environment information about the saddled vehicle 100.

For example, the surrounding environment information includes a collision possibility information that is information about possibility of occurring a collision between the saddled vehicle 100 and an obstacle. The collision possibility information can be acquired based on, for example, a distance between the saddled vehicle 100 and the preceding vehicle and the relative speed of the saddled vehicle 100 with respect to the preceding vehicle. Since the braking force generated in the saddled vehicle 100 is amplified based on the collision possibility information, the possibility of avoiding the collision with the preceding vehicle or the like is improved and the safety is improved.

Further, for example, the surrounding environment information includes information about the distance between the saddled vehicle 100 and a target vehicle. As the target vehicle, for example, the preceding vehicle traveling in front of the saddled vehicle 100 can be set. Since the amplification of the braking force generated in the saddled vehicle 100 is executed based on the information about the distance between the saddled vehicle 100 and the target vehicle, the distance between the saddled vehicle 100 and the target vehicle such as the preceding vehicle is properly ensured and the safety is improved. Additionally, the distance between the saddled vehicle 100 and the target vehicle may mean a distance in a direction along a lane (specifically, a traveling lane of the saddled vehicle 100) or may mean a straight-line distance. The information about the distance between the saddled vehicle 100 and the target vehicle may be the distance itself, one obtained by dividing the distance by the speed of the saddled vehicle 100, that is, a difference in passage time between the saddled vehicle 100 and the target vehicle, and other physical quantities that can be substantially converted into them.

Since the pump 34 is driven while the execution unit 62 opens the inlet valve 31, closes the outlet valve 32, closes the first valve 35, and opens the second valve 36 during the activation of the driving support mode, the wheel cylinder pressure is increased. Accordingly, the wheel cylinder pressure increases with respect to the normal pressure according to the braking operation. That is, the wheel cylinder pressure is amplified. Therefore, the braking force generated in the vehicle wheel increases with respect to the normal braking force according to the braking operation. Accordingly, the braking force generated in the saddled vehicle 100 can be amplified.

The execution unit 62 amplifies the braking force generated in the saddled vehicle 100 just by amplifying, for example, the first wheel cylinder pressure of the first wheel cylinder 24a in the driving support mode. However, in the driving support mode, the execution unit 62 may amplify both the first wheel cylinder pressure of the first wheel cylinder 24a and the second wheel cylinder pressure of the second wheel cylinder 24b or only the second wheel cylinder pressure of the second wheel cylinder 24b.

The determination unit 63 makes various determinations and outputs the determination result to the execution unit 62. Particularly, the determination unit 63 determines whether or not the rider of the saddled vehicle 100 performs the braking operation based on an output from at least one of the first master cylinder pressure sensor 45a and the second master cylinder pressure sensor 45b which correspond to the detector. The execution unit 62 executes the driving support mode when the determination unit 63 determines that the braking operation is performed.

Additionally, in the present specification, an example in which the detector detecting the state quantity of the braking operation unit operated by the rider during the service braking corresponds to the first master cylinder pressure sensor 45a and the second master cylinder pressure sensor 45b will be mainly described. However, the detector according to the present invention is not limited to the first master cylinder pressure sensor 45a and the second master cylinder pressure sensor 45b and may be, for example, a displacement sensor that detects the displacement amount of the braking operation unit. **In** this case, the determination unit 63 determines whether or not the rider of the saddled vehicle 100 performs the braking operation based on the output from the displacement sensor.

### <Operation of controller>

An operation of the controller 60 according to the embodiment of the present invention will be described with reference to Figs. 4 to 6.

As described above, in this embodiment, the execution unit 62 executes the driving support mode capable of amplifying the braking force generated in the saddled vehicle 100 in a state in which the rider of the saddled vehicle 100 performs the braking operation.

Fig. 4 is a schematic diagram showing an example of a relationship between the normal braking force according to the braking operation and the braking force generated in the saddled vehicle in the driving support mode. In Fig. 4, the horizontal axis T indicates the time and the vertical axis B indicates the braking force. Further, in Fig. 4, a dashed line L1 indicates the normal braking force according to the braking operation and a solid line L2 indicates the braking force generated in the saddled vehicle 100 in the driving support mode. As shown in Fig. 4, the braking force generated in the saddled vehicle 100 indicated by the solid line L2 is controlled to be larger than the normal braking force indicated by the dashed line L1 in the driving support mode. That is, the braking force generated in the saddled vehicle 100 is amplified.

Incidentally, as described above, it is determined whether or not the rider of the saddled vehicle 100 performs the braking operation based on, for example, the master cylinder pressure. In this case, when the master cylinder pressure becomes lower than a reference pressure, it is determined that the braking operation is released. Then, as will be described later, the driving support mode ends and the amplification of the braking force generated in the saddled vehicle 100 ends. When a degree of reduction in the braking force at the end of the amplification of the braking force generated in the saddled vehicle 100 is not optimized in response to the operation state of the rider's braking operation, there is a risk that the braking force may be reduced to a degree that greatly deviates from the rider's intension at the end of the amplification of the braking force. Additionally, the degree of reduction in the braking force may include an amount of reduction in the braking force and a gradient of reduction in the braking force.

Here, in the driving support mode, when the first wheel cylinder pressure of the first wheel cylinder 24a is amplified when the rider performs the braking operation using the first braking operation unit 11, the first master cylinder pressure of the first master cylinder 21a decreases. At this time, for example, when the first master cylinder pressure decreases excessively, the piston of the first master cylinder 21a is sucked so that the first braking operation unit 11 is not displaced even when the braking operation is released. This state is also called lever suction.

Further, in the driving support mode, when the second wheel cylinder pressure of the second wheel cylinder 24b is amplified while the rider performs the braking operation using the second braking operation unit 13, the second master cylinder pressure of the second master cylinder 21b decreases. At this time, for example, when the second master cylinder pressure decreases excessively, the piston of the second master cylinder 21b is sucked so that the second braking operation unit 13 is not displaced even when the braking operation is released. This state is also called pedal suction.

For example, when lever suction or pedal suction occurs, the master cylinder pressure becomes lower than a reference pressure, the driving support mode ends, and the amplification of the braking force generated in the saddled vehicle 100 ends. In such a case, it is against the rider's intention to decrease the braking force to an excessively large degree at the end of the amplification of the braking force generated in the saddled vehicle 100. On the other hand, when the rider intentionally releases the braking operation quickly and the driving support mode ends, it is against the rider's intention to decrease the braking force to an excessively small degree at the end of the amplification of the braking force generated in the saddled vehicle 100.

In particular, as in this embodiment, in the driving support mode, when the braking force generated in the saddled vehicle 100 is amplified based on the surrounding environment information, it is assumed that the rider cannot recognize the amplification of the braking force. Accordingly, it is important to suppress the braking force generated in the saddled vehicle 100 from decreasing to a degree that greatly deviates from the rider's intention.

Here, in this embodiment, in the driving support mode, the execution unit 62 of the controller 60 optimizes the degree of reduction in the braking force at the end of the amplification of the braking force generated in the saddled vehicle 100 in response to the operation state of the rider's braking operation. Accordingly, the appropriate improvement in safety of the saddled vehicle 100 is realized. Hereinafter, a process related to the driving support mode executed by such a controller 60 will be described.

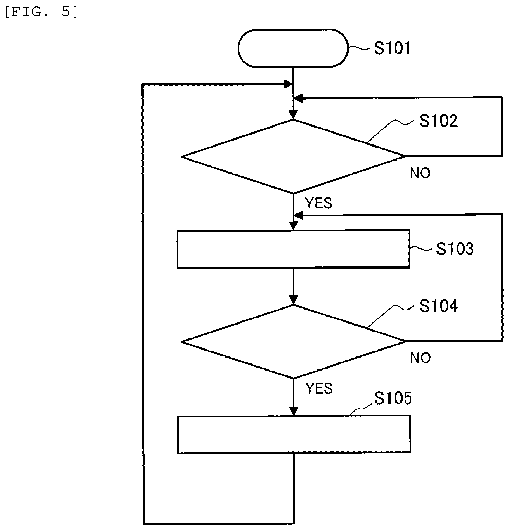

Fig. 5 is a flowchart showing an example of an overall flow of a process related to the driving support mode executed by the controller 60. step S101 in Fig. 5 corresponds to the start of the control flow shown in Fig. 5.

When the control flow shown in Fig. 5 is started, in step S102, the determination unit 63 determines whether or not the start condition of the driving support mode is satisfied. Here, whether or not to start the driving support mode is determined based on the surrounding environment information. The start condition of the driving support mode is different in accordance with the type of surrounding environment information used in the driving support mode.

For example, when the collision possibility information about the saddled vehicle 100 is used as the surrounding environment information, the condition that the rider performs the braking operation and the possibility of collision of the saddled vehicle 100 is above a reference value can be used as the start condition of the driving support mode.

Further, for example, when the information about the distance between the saddled vehicle 100 and the target vehicle is used as the surrounding environment information, the condition that the rider performs the braking operation and the distance between the saddled vehicle 100 and the target vehicle is shorter than a reference distance or the passage time difference is shorter than a reference time can be used as the start condition of the driving support mode.

When it is determined that the start condition of the driving support mode is not satisfied (step S102/NO), the process of step S102 is repeated. On the other hand when it is determined that the start condition of the driving support mode is satisfied (step S102/YES), the process proceeds to step S103.

When the determination is YES in step S102, in step S103, the execution unit 62 executes the driving support mode. As described above, in the driving support mode, the execution unit 62 amplifies the braking force generated in the saddled vehicle 100 based on the surrounding environment information about the saddled vehicle 100.

For example, in the driving support mode, the execution unit 62 amplifies the braking force generated in the saddled vehicle 100 based on the collision possibility information so as to avoid the collision with the preceding vehicle. In this case, the execution unit 62 determines the deceleration capable of avoiding the collision with the preceding vehicle as a target deceleration. For example, the execution unit 62 determines a larger deceleration as the target deceleration as the possibility of collision increases. Then, the execution unit 62 amplifies the braking force generated in the saddled vehicle 100 so that the target deceleration is generated in the saddled vehicle 100.

Further, for example, in the driving support mode, the execution unit 62 amplifies the braking force generated in the saddled vehicle 100 based on the information about the distance between the saddled vehicle 100 and the target vehicle so that the distance or the passage time difference between the saddled vehicle 100 and the target vehicle is maintained at a target value. In this case, the execution unit 62 determines a deceleration in which the distance between the saddled vehicle 100 and the target vehicle or the passage time difference between the saddled vehicle 100 and the target vehicle is maintained at the target value as the target deceleration. For example, the execution unit 62 determines a larger braking force as the target deceleration as the distance between the saddled vehicle 100 and the target vehicle or the passage time difference between the saddled vehicle 100 and the target vehicle becomes shorter. Then, the execution unit 62 amplifies the braking force generated in the saddled vehicle 100 so that the target deceleration is generated in the saddled vehicle 100.

In step S104 after step S103, the determination unit 63 determines whether or not the end condition of the driving support mode is satisfied.

The end condition of the driving support mode is a condition that the start condition is not satisfied. For example, the condition that the rider's braking operation is released may correspond to the end condition. As described above, the determination unit 63 may determine that the braking operation is released, for example, when the master cylinder pressure is lower than the reference pressure. Further, for example, the condition that the possibility of collision of the saddled vehicle 100 is below the reference value may correspond to the end condition. Further, for example, the distance between the saddled vehicle 100 and the target vehicle is above the reference distance or the passage time difference is above the reference time may correspond to the end condition.

When it is determined that the end condition of the driving support mode is not satisfied (step S104/NO), the process returns to step S103. On the other hand, when it is determined that the end condition of the driving support mode is satisfied (step S104/YES), the process proceeds to step S105, the execution unit 62 ends the driving support mode, and the process returns to step S102.

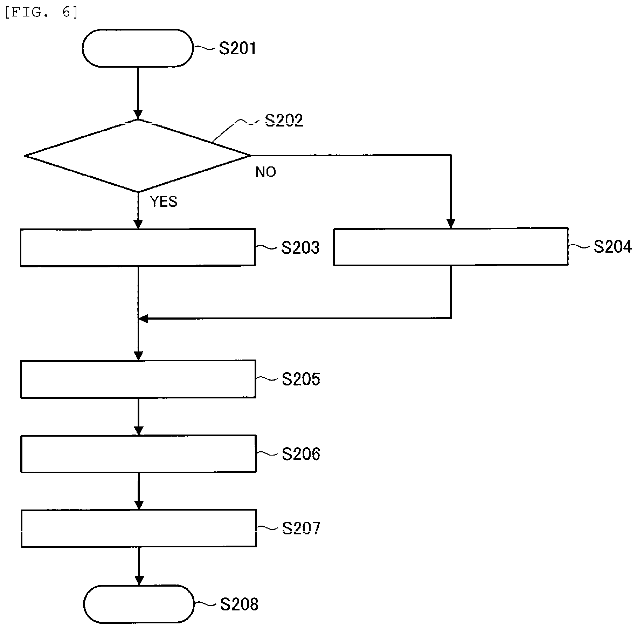

Fig. 6 is a flowchart showing an example of a flow of an ending process of the driving support mode executed by the controller 60. The control flow shown in Fig. 6 is executed in step S105 in the control flow shown in Fig. 5. Step S201 in Fig. 6 corresponds to the start of the control flow shown in Fig. 6. Step S208 in Fig. 6 corresponds to the end of the control flow shown in Fig. 6.

Additionally, the control flow shown in Fig. 6 is an example of the flow of the process executed when the driving support mode ends due to the determination that the braking operation is released after the master cylinder pressure becomes lower than the reference pressure. Hereinafter, the master cylinder pressure of the master cylinder provided to the braking operation unit of which the braking operation is released is simply referred to as the master cylinder pressure.

When the control flow shown in Fig. 6 is started, in step S202, the determination unit 63 determines whether a change of a degree in the master cylinder pressure is smaller than a reference degree. Additionally, the degree of change in the master cylinder pressure in step S202 is, for example, the degree of change in the master cylinder pressure for a predetermined period including a time point in which the release of the braking operation is determined or at any time in the predetermined period. Additionally, the degree of change in the master cylinder pressure may include a master cylinder pressure change amount and a master cylinder pressure change gradient. The master cylinder pressure change amount means, for example, the total amount of the master cylinder pressure changing over a predetermined period and the master cylinder pressure change gradient means, for example, the change amount of the master cylinder pressure per unit time at a certain time point.

When it is determined that the degree of change in the master cylinder pressure is smaller than the reference degree (step S202/YES), the process proceeds to step S203. On the other hand, when it is determined that the degree of change in the master cylinder pressure is larger than the reference degree (step S202/NO), the process proceeds to step S204.

The reference degree is set to, for example, a value capable of distinguishing whether the occurrence of lever suction or pedal suction is a factor that ends the driving support mode or whether the releasing of the braking operation according to the rider's intention is the factor that ends the driving support mode. In this case, when the degree of change in the master cylinder pressure is smaller than the reference degree, the occurrence of lever suction or pedal suction can be determined as the factor that ends the driving support mode. On the other hand, when the degree of change in the master cylinder pressure is larger than the reference degree, the releasing of the braking operation according to the rider's intension can be determined as the factor that ends the driving support mode.

When the determination is YES in step S202, in step S203, the execution unit 62 sets a target value of the degree of reduction in the braking force at the end of the amplification of the braking force generated in the saddled vehicle 100 as a first target degree of reduction. On the other hand, when the determination is NO in S202, in step S204, the execution unit 62 sets the target value of the degree of reduction in the braking force at the end of the amplification of the braking force generated in the saddled vehicle 100 as a second target degree of reduction. The first target degree of reduction is smaller than the second target degree of reduction.

As will be described later, in the control flow shown in Fig. 6, the execution unit 62 determines the target value of the degree of reduction in the braking force at the end of the amplification of the braking force generated in the saddled vehicle 100 and then reduces the braking force in such a way that the degree of reduction in the braking force has the determined target value. As described above, when the degree of change in the master cylinder pressure is smaller than the reference degree, the execution unit 62 sets the target value of the degree of reduction in the braking force at the end of the amplification of the braking force generated in the saddled vehicle 100 to a small value as compared to a case in which the degree of change in the master cylinder pressure is larger than the reference degree. That is, when the degree of change in the master cylinder pressure is smaller than the reference degree, the execution unit 62 reduces the braking force to a small degree of reduction at the end of the amplification of the braking force generated in the saddled vehicle 100 as compared to a case in which the degree of change in the master cylinder pressure is larger than the reference degree.

As described above, in this embodiment, in the driving support mode, the execution unit 62 changes the degree of reduction in the braking force at the end of the amplification of the braking force generated in the saddled vehicle 100 in response to the degree of change in output from at least one of the first master cylinder pressure sensor 45a and the second master cylinder pressure sensor 45b corresponding to the detector detecting the state quantity of the braking operation unit during the service braking. Accordingly, for example, when the driving support mode ends due to the occurrence of lever suction or pedal suction and the amplification of the braking force generated in the saddled vehicle 100 ends, it is suppressed that the braking force is reduced to an excessively large degree. Further, for example, when the driving support mode ends due to the quick releasing of the braking operation according to the rider's intension and the amplification of the braking force generated in the saddled vehicle 100 ends, it is suppressed that the braking force is reduced to an excessively small degree. Therefore, it is possible to suppress the braking force generated in the saddled vehicle 100 from decreasing to a degree that greatly deviates from the rider's intension at the end of the amplification of the braking force generated in the saddled vehicle 100. Thus, it is possible to properly improve the safety of the saddled vehicle 100.

Additionally, in the above example, in the driving support mode, the execution unit 62 changes the degree of reduction in the braking force at the end of the amplification of the braking force generated in the saddled vehicle 100 in two levels depending on whether the degree of change in the master cylinder pressure is smaller than the reference degree. However, in the driving support mode, the execution unit 62 may continuously change the degree of reduction in the braking force at the end of the amplification of the braking force generated in the saddled vehicle 100 in response to the degree of change in the master cylinder pressure. In this case, for example, in the driving support mode, the execution unit 62 reduces the degree of reduction in the braking force at the end of the amplification of the braking force generated in the saddled vehicle 100 as the degree of change in the master cylinder pressure decreases.

In step S205 after step S203 or step S204, the execution unit 62 changes the target value of the degree of reduction in the braking force at the end of the amplification of the braking force generated in the saddled vehicle 100 in response to the vehicle speed of the saddled vehicle 100. The vehicle speed of the saddled vehicle 100 can be acquired based on the detection result of the front wheel speed sensor 41 and the detection result of the rear wheel speed sensor 42.

As described above, in the control flow shown in Fig. 6, in the driving support mode, the execution unit 62 changes the degree of reduction in the braking force at the end of the amplification of the braking force generated in the saddled vehicle 100 in response to the vehicle speed of the saddled vehicle 100. Here, the stability of the posture of the saddled vehicle 100 changes in response to the vehicle speed of the saddled vehicle 100. For example, the posture of the saddled vehicle 100 is more likely to be unstable as the vehicle speed becomes lower. Therefore, it is possible to suppress the unstable posture of the saddled vehicle 100 by changing the degree of reduction in the braking force at the end of the amplification of the braking force generated in the saddled vehicle 100 in response to the vehicle speed of the saddled vehicle 100.

For example, in the driving support mode, the execution unit 62 may reduce the degree of reduction in the braking force at the end of the amplification of the braking force generated in the saddled vehicle 100 when the vehicle speed is lower than the reference vehicle speed as compared to a case in which the vehicle speed is higher than the reference vehicle speed. The reference vehicle speed is, for example, a vehicle speed immediately before the saddled vehicle 100 stops. The posture of the saddled vehicle 100 is likely to be unstable when the braking force generated in the saddled vehicle 100 is suddenly reduced immediately before the saddled vehicle 100 stops. Therefore, since the degree of reduction in the braking force at the end of the amplification of the braking force generated in the saddled vehicle 100 is reduced when the vehicle speed is lower than the reference vehicle speed as compared to a case in which the vehicle speed is higher than the reference vehicle speed, it is possible to suppress the degree of reduction in the braking force from increasing excessively immediately before the saddled vehicle 100 stops and to properly suppress the posture of the saddled vehicle 100 from becoming unstable.

In step S206 after step S205, the execution unit 62 changes the target value of the degree of reduction in the braking force at the end of the amplification of the braking force generated in the saddled vehicle 100 in response to information about the traveling posture of the saddled vehicle 100.

The traveling posture information about the saddled vehicle 100 may include various kinds of information about the posture of the saddled vehicle 100 in the travel state. The traveling posture information may include, for example, information detected by the inertia measuring device 44. However, the traveling posture information is not limited to the information detected by the inertia measuring device 44 and may include, for example, the stroke amount or the damping force of the front suspension of the saddled vehicle 100.

As described above, in the control flow shown in Fig. 6, the execution unit 62 changes the degree of reduction in the braking force at the end of the amplification of the front braking force generated in the saddled vehicle 100 in response to the traveling posture information about the saddled vehicle 100. For example, the posture of the saddled vehicle 100 is likely to change in the pitch direction as the damping force of the front suspension is reduced. Thus, the execution unit 62 may reduce the degree of reduction in the braking force at the end of the amplification of the braking force generated in the saddled vehicle 100 as the damping force of the front suspension decreases. Accordingly, it is possible to suppress the posture of the saddled vehicle 100 from becoming unstable. In this way, it is possible to suppress the posture of the saddled vehicle 100 from becoming unstable by changing the degree of reduction in the braking force at the end of the amplification of the braking force generated in the saddled vehicle 100 in response to the information about the traveling posture of the saddled vehicle 100.

In step S207 after step S206, the execution unit 62 reduces the braking force so that the degree of reduction of the braking force generated in the saddled vehicle 100 becomes the target value determined by the above process and the control flow shown in Fig. 6 ends.

For example, the execution unit 62 can reduce the braking force generated in the vehicle wheel by opening the first valve 35 and the second valve 36 and driving the pump 34. Then, the execution unit 62 can control the degree of reduction in the braking force generated in the vehicle wheel by controlling, for example, the rotation speed of the pump 34 in this state. Further, for example, the execution unit 62 can also control the degree of reduction in the braking force generated in the vehicle wheel by controlling the opening degree of the first valve 35. Accordingly, it is possible to change the degree of reduction in the braking force at the end of the amplification of the braking force generated in the saddled vehicle 100.

In the above description, an example of the process related to the driving support mode has been described with reference to Figs. 5 and 6. However, the process executed by the controller 60 is not limited to the above-described example.

For example, in the driving support mode, the execution unit 62 may determine each of the degree of reduction in the braking force generated in the front wheel 3 and the degree of reduction in the braking force generated in the rear wheel 4 of the saddled vehicle 100 at the end of the amplification of the braking force generated in the saddled vehicle 100. In this case, the execution unit 62 determines each of a target value of the degree of reduction in the braking force generated in the front wheel 3 and a target value of the degree of reduction in the braking force generated in the rear wheel 4 so that the total value of the target value of the degree of reduction in the braking force generated in the front wheel 3 and the target value of the degree of reduction in the braking force generated in the rear wheel 4 becomes the target value of the degree of reduction of the braking force generated in the saddled vehicle 100, for example, at the end of the amplification of the braking force generated in the saddled vehicle 100. Then, the execution unit 62 reduces the braking force generated in the front wheel 3 and the braking force generated in the rear wheel 4 so that each of the degree of reduction in the braking force generated in the front wheel 3 and the degree of reduction in the braking force generated in the rear wheel 4 at the end of the amplification of the braking force generated in the saddled vehicle 100 becomes the determined target value. The execution unit 62 can independently control the braking force generated in the front wheel 3 and the braking force generated in the rear wheel 4 by independently controlling the first wheel cylinder pressure of the first wheel cylinder 24a and the second wheel cylinder pressure of the second wheel cylinder 24b.

Here, in the driving support mode, the execution unit 62 may preferably increase the degree of reduction in the braking force generated in the rear wheel 4 more than the degree of reduction in the braking force generated in the front wheel 3 at the end of the amplification of the braking force generated in the saddled vehicle 100. If the braking force generated in the front wheel 3 is quickly reduced while the saddled vehicle 100 is decelerated, the posture of the saddled vehicle 100 is likely to change in the pitch direction. Therefore, it is possible to suppress the posture of the saddled vehicle 100 from becoming unstable by increasing the degree of reduction in the braking force generated in the rear wheel 4 more than the degree of reduction in the braking force generated in the front wheel 3 at the end of the amplification of the braking force generated in the saddled vehicle 100.

### <Effect of controller>

An effect of the controller 60 according to the embodiment of the present invention will be described.

In the controller 60, in the driving support mode, the execution unit 62 changes the degree of reduction in the braking force at the end of the amplification of the braking force generated in the saddled vehicle 100 in response to the degree of change in output from the detector (for example, the first master cylinder pressure sensor 45a and the second master cylinder pressure sensor 45b). Accordingly, it is possible to suppress the braking force generated in the saddled vehicle 100 at the end of the amplification of the braking force generated in the saddled vehicle 100 from decreasing to a degree that greatly deviates from the rider's intension. Therefore, it is possible to properly improve the safety of the saddled vehicle 100. Particularly, in the driving support mode, when the braking force generated in the saddled vehicle 100 is amplified based on the surrounding environment information, it is important to suppress a large fluctuation in the degree of reduction in the braking force generated in the braking force generated in the saddled vehicle 100 against the rider's intension.

Preferably, in the controller 60, in the driving support mode, the execution unit 62 changes the degree of reduction in the braking force at the end of the amplification of the braking force generated in the saddled vehicle 100 in response to the vehicle speed of the saddled vehicle 100 in addition to the degree of change in output from the detector. Accordingly, it is possible to properly suppress the posture of the saddled vehicle 100 at the end of the amplification of the braking force generated in the saddled vehicle 100 from becoming unstable in response to the vehicle speed.

Preferably, in the controller 60, in the driving support mode, the execution unit 62 reduces the degree of reduction in the braking force at the end of the amplification of the braking force generated in the saddled vehicle 100 when the vehicle speed is lower than the reference vehicle speed as compared to a case in which the vehicle speed is higher than the reference vehicle speed. Accordingly, it is possible to more properly suppress the posture of the saddled vehicle 100 at the end of the amplification of the braking force generated in the saddled vehicle 100 from becoming unstable in response to the vehicle speed.

Preferably, in the controller 60, in the driving support mode, the execution unit 62 changes the degree of reduction in the braking force at the end of the amplification of the braking force generated in the saddled vehicle 100 in response to the traveling posture information about the saddled vehicle 100 in addition to the degree of change in output from the detector. Accordingly, it is possible to properly suppress the posture of the saddled vehicle 100 at the end of the amplification of the braking force generated in the saddled vehicle 100 from becoming unstable in response to the traveling posture information.

Preferably, in the controller 60, in the driving support mode, the execution unit 62 determines each of the degree of reduction in the braking force generated in the front wheel 3 and the degree of reduction in the braking force generated in the rear wheel 4 of the saddled vehicle 100 at the end of the amplification of the braking force generated in the saddled vehicle 100. Accordingly, it is possible to suppress the posture of the saddled vehicle 100 at the end of the amplification of the braking force generated in the saddled vehicle 100 from becoming unstable.

Preferably, in the controller 60, in the driving support mode, the execution unit 62 increases the degree of reduction in the braking force generated in the rear wheel 4 more than the degree of reduction in the braking force generated in the front wheel 3 at the end of the amplification of the braking force generated in the saddled vehicle 100. Accordingly, it is possible to properly realize that the unstable posture of the saddled vehicle 100 at the end of the amplification of the braking force generated in the saddled vehicle 100 is suppressed.

Preferably, in the controller 60, the detector (specifically, the first master cylinder pressure sensor 45a and the second master cylinder pressure sensor 45b) detects the master cylinder pressure which is the pressure of the braking liquid of the master cylinder as the state quantity of the braking operation unit. Accordingly, it is possible to properly detect the state quantity of the braking operation unit. Then, it is possible to properly realize that the degree of reduction in the braking force at the end of the amplification of the braking force generated in the saddled vehicle 100 is optimized in response to the detected state quantity of the braking operation unit.

Further, when the detector detects the master cylinder pressure, it is determined whether or not the rider of the saddled vehicle 100 performs the braking operation based on the master cylinder pressure. **In** this case, the master cylinder pressure degree of reduction at the end of the driving support mode is different depending on whether the occurrence of lever suction or pedal suction is a factor that ends the driving support mode or the releasing of the braking operation according to the rider's intension is a factor that ends the driving support mode. By using a relationship between such a factor that ends the driving support mode and the master cylinder pressure degree of reduction, the optimization of the degree of reduction in the braking force at the end of the amplification of the braking force generated in the saddled vehicle 100 is appropriately realized.

Preferably, in the controller 60, in the driving support mode, the execution unit 62 ends the amplification of the braking force generated in the saddled vehicle 100 when the master cylinder pressure is lower than the reference pressure. Accordingly, the ending of the amplification of the braking force generated in the saddled vehicle 100 is properly realized at a timing in which the braking operation is released.

Preferably, in the controller 60, the surrounding environment information includes the collision possibility information about the saddled vehicle 100 and the execution unit 62 amplifies the braking force generated in the saddled vehicle 100 based on the collision possibility information in the driving support mode. Accordingly, the possibility of avoiding the collision with the preceding vehicle or the like is improved and the safety is improved.

Preferably, in the controller 60, the surrounding environment information includes the information about the distance between the saddled vehicle 100 and the target vehicle and the execution unit 62 amplifies the braking force generated in the saddled vehicle 100 based on the information about the distance in the driving support mode. Accordingly, the distance between the saddled vehicle 100 and the target vehicle or the passage time difference between the saddled vehicle 100 and the target vehicle such as the preceding vehicle is properly ensured and the safety is improved.

The present invention is not limited to the description of the embodiment. For example, modifications are possible within the scope of the invention, as defined by the appended claims.

### Reference Signs List

1: Body
2: Handle
3: Front wheel
3a: Rotor
4: Rear wheel
4a: Rotor
10: Brake system
11: First braking operation unit
12: Front wheel brake mechanism
13: Second braking operation unit
14: Rear wheel brake mechanism
21a: First master cylinder
21b: Second master cylinder
22a: First reservoir
22b: Second reservoir
23a: First brake caliper
23b: Second brake caliper
24a: First wheel cylinder
24b: Second wheel cylinder
25a: Main flow path
25b: Main flow path
26a: Sub-flow path
26b: Sub-flow path
27a: Supply flow path
27b: Supply flow path
31: Inlet valve
31a: Inlet valve
31b: Inlet valve
32: Outlet valve
32a: Outlet valve
32b: Outlet valve
33a: Accumulator
33b: Accumulator
34: Pump
34a: Pump
34b: Pump
35: First valve
35a: First valve
35b: First valve
36: Second valve
36a: Second valve
36b: Second valve
41: Front wheel speed sensor
42: Rear wheel speed sensor
43: Surrounding environment sensor
44: Inertia measuring device
45a: First master cylinder pressure sensor
45b: Second master cylinder pressure sensor
50: Hydraulic pressure control unit
51: Base body
60: Controller
61: Acquisition unit
62: Execution unit
63: Determination unit
100: Saddled vehicle.

## Claims

1. A controller (60) configured to maneuver a saddled vehicle (100), the saddled vehicle (100) including a braking operation unit (11, 13) and a detector (45a, 45b), the braking operation unit (11, 13) configured to be operated by a rider, the detector (45a, 45b) configured to detect a state quantity of the braking operation unit (11, 13) during a service braking, the controller comprising:
a determination unit (63) configured to determine, based on an output from the detector (45a, 45b), whether the braking operation unit (11, 13) is in operation; and
an execution unit (62) configured to execute a driving support mode when the determination unit (63) determines that the braking operation unit (11, 13) is in operation, the driving support mode in which a braking force generated in the saddled vehicle (100) is amplified, **characterized in that**
the execution unit (62), in the driving support mode:
amplifies the braking force based on a surrounding environment information that is information about environment around the saddled vehicle (100); and
changes, based on a degree of change in the output from the detector (45a, 45b), a degree of reduction in the braking force at the end of the amplification of the braking force generated in the saddled vehicle (100).

2. The controller according to claim 1, wherein
the execution unit (62), in the driving support mode, changes the degree of reduction in the braking force at the end of the amplification of the braking force generated in the saddled vehicle (100) based on a vehicle speed of the saddled vehicle (100) in addition to the degree of change in output from the detector (45a, 45b).

3. The controller according to claim 2, wherein
the execution unit (62), in the driving support mode, reduces the degree of reduction in the braking force at the end of the amplification of the braking force generated in the saddled vehicle (100) when the vehicle speed is lower than a reference vehicle speed as compared to a case where the vehicle speed is higher than the reference vehicle speed.

4. The controller according to any one of claims 1 to 3, wherein
the execution unit (62), in the driving support mode, changes the degree of reduction in the braking force at the end of the amplification of the braking force generated in the saddled vehicle (100) based on information about a traveling posture of the saddled vehicle (100) in addition to the degree of change in output from the detector (45a, 45b).

5. The controller according to any one of claims 1 to 4, wherein
the execution unit (62), in the driving support mode, determines each of the degree of reduction in the braking force generated in a front wheel (3) of the saddled vehicle (100) and the degree of reduction in the braking force generated in a rear wheel (4) of the saddled vehicle (100) at the end of the amplification of the braking force generated in the saddled vehicle (100).

6. The controller according to claim 5, wherein
the execution unit (62), in the driving support mode, increases the degree of reduction in the braking force generated in the rear wheel (4) at the end of the amplification of the braking force generated in the saddled vehicle (100) as compared to the degree of reduction in the braking force generated in the front wheel (3).

7. The controller according to any one of claims 1 to 6, wherein
the detector (45a, 45b) detects a master cylinder pressure which is a pressure of a braking liquid of a master cylinder (21a, 21b) as the state quantity.

8. The controller according to claim 7, wherein
the execution unit (62), in the driving support mode, ends the amplification of the braking force generated in the saddled vehicle (100) when the master cylinder pressure is lower than a reference pressure.

9. The controller according to any one of claims 1 to 8, wherein
the surrounding environment information includes a collision possibility information about possibility of occurring a collision of the saddled vehicle (100) and an object, and
the execution unit (62) amplifies the braking force generated in the saddled vehicle (100) in the driving support mode based on the collision possibility information.

10. The controller according to any one of claims 1 to 8, wherein
the surrounding environment information includes information about a distance between the saddled vehicle (100) and a target vehicle, and
the execution unit (62) amplifies the braking force generated in the saddled vehicle (100) in the driving support mode based on the information about the distance between the saddled vehicle (100) and the target vehicle.

11. A control method for maneuvering a saddled vehicle (100), the saddled vehicle (100) including a braking operation unit (11, 13) and a detector (45a, 45b), the braking operation unit (11, 13) configured to be operated by a rider, the detector (45a, 45b) configured to detect a state quantity of the braking operation unit (11, 13) during a service braking, the control method comprising:
determining, using a determination unit (63) of a controller (60), whether the braking operation unit (11, 13) is in operation, based on an output from the detector (45a, 45b); and
executing, using an execution unit (62) of the controller (60), a driving support mode when the determination unit (63) determines that the braking operation unit (11, 13) is in operation, the driving support mode in which a braking force generated in the saddled vehicle (100) is amplified, **characterized in that**
the execution unit (62), in the driving support mode:
amplifies the braking force based on a surrounding environment information that is information about environment around the saddled vehicle (100); and
changes, based on a degree of change in the output from the detector (45a, 45b), a degree of reduction in the braking force at the end of the amplification of the braking force generated in the saddled vehicle (100).

## Patentansprüche

1. Steuerung (60), die dazu ausgelegt ist, ein Sattelfahrzeug (100) zu manövrieren, wobei das Sattelfahrzeug (100) eine Bremsbetätigungseinheit (11, 13) und einen Detektor (45a, 45b) umfasst, wobei die Bremsbetätigungseinheit (11, 13) dazu ausgelegt ist, von einem Fahrer betätigt zu werden, wobei der Detektor (45a, 45b) dazu ausgelegt ist, eine Zustandsgröße der Bremsbetätigungseinheit (11, 13) während einer Betriebsbremsung zu detektieren, wobei die Steuerung Folgendes umfasst:
eine Bestimmungseinheit (63), die dazu ausgelegt ist, basierend auf einer Ausgabe von dem Detektor (45a, 45b) zu bestimmen, ob sich die Bremsbetätigungseinheit (11, 13) in Betätigung befindet; und
eine Ausführungseinheit (62), die dazu ausgelegt ist, einen Fahrunterstützungsmodus auszuführen, wenn die Bestimmungseinheit (63) bestimmt, dass sich die Bremsbetätigungseinheit (11, 13) in Betätigung befindet, der Fahrunterstützungsmodus, bei dem eine in dem Sattelfahrzeug (100) erzeugte Bremskraft verstärkt wird, **dadurch gekennzeichnet ist, dass**
die Ausführungseinheit (62) im Fahrunterstützungsmodus:
die Bremskraft basierend auf Umgebungsinformationen verstärkt, die Informationen über die Umgebung um das Sattelfahrzeug (100) herum sind; und
basierend auf einem Grad einer Änderung der Ausgabe von dem Detektor (45a, 45b) einen Grad einer Reduzierung der Bremskraft am Ende der Verstärkung der in dem Sattelfahrzeug (100) erzeugten Bremskraft ändert.

2. Steuerung nach Anspruch 1, wobei
die Ausführungseinheit (62) im Fahrunterstützungsmodus den Grad der Reduzierung der Bremskraft am Ende der Verstärkung der in dem Sattelfahrzeug (100) erzeugten Bremskraft zusätzlich zu dem Grad der Änderung der Ausgabe von dem Detektor (45a, 45b) basierend auf einer Fahrzeuggeschwindigkeit des Sattelfahrzeugs (100) ändert.

3. Steuerung nach Anspruch 2, wobei
die Ausführungseinheit (62) im Fahrunterstützungsmodus den Grad der Reduzierung der Bremskraft am Ende der Verstärkung der in dem Sattelfahrzeug (100) erzeugten Bremskraft bei einer Fahrzeuggeschwindigkeit, die niedriger als eine Referenzfahrzeuggeschwindigkeit ist, im Vergleich zu einem Fall, dass die Fahrzeuggeschwindigkeit höher als die Referenzfahrzeuggeschwindigkeit ist, reduziert.

4. Steuerung nach einem der Ansprüche 1 bis 3, wobei
die Ausführungseinheit (62) im Fahrunterstützungsmodus den Grad der Reduzierung der Bremskraft am Ende der Verstärkung der in dem Sattelfahrzeug (100) erzeugten Bremskraft zusätzlich zu dem Grad der Änderung der Ausgabe von dem Detektor (45a, 45b) basierend auf Informationen über eine Fahrhaltung des Sattelfahrzeugs (100) ändert.

5. Steuerung nach einem der Ansprüche 1 bis 4, wobei
die Ausführungseinheit (62) im Fahrunterstützungsmodus jeweils den Grad der Reduzierung der in einem Vorderrad (3) des Sattelfahrzeugs (100) erzeugten Bremskraft und den Grad der Reduzierung der in einem Hinterrad (4) des Sattelfahrzeugs (100) erzeugten Bremskraft am Ende der Verstärkung der in dem Sattelfahrzeug (100) erzeugten Bremskraft bestimmt.

6. Steuerung nach Anspruch 5, wobei
die Ausführungseinheit (62) im Fahrunterstützungsmodus den Grad der Reduzierung der in dem Hinterrad (4) erzeugten Bremskraft am Ende der Verstärkung der in dem Sattelfahrzeug (100) erzeugten Bremskraft im Vergleich zum Grad der Reduzierung der in dem Vorderrad (3) erzeugten Bremskraft erhöht.

7. Steuerung nach einem der Ansprüche 1 bis 6, wobei der Detektor (45a, 45b) als die Zustandsgröße einen Hauptzylinderdruck detektiert, der ein Druck einer Bremsflüssigkeit eines Hauptzylinders (21a, 21b) ist.

8. Steuerung nach Anspruch 7, wobei
die Ausführungseinheit (62) im Fahrunterstützungsmodus die Verstärkung der in dem Sattelfahrzeug (100) erzeugten Bremskraft beendet, wenn der Hauptzylinderdruck niedriger als ein Referenzdruck ist.

9. Steuerung nach einem der Ansprüche 1 bis 8, wobei die Umgebungsinformationen Kollisionsmöglichkeitsinformationen über eine Möglichkeit eines Auftretens einer Kollision des Sattelfahrzeugs (100) und eines Objekts umfassen, und die Ausführungseinheit (62) die in dem Sattelfahrzeug (100) erzeugte Bremskraft im Fahrunterstützungsmodus basierend auf den Kollisionsmöglichkeitsinformationen verstärkt.

10. Steuerung nach einem der Ansprüche 1 bis 8, wobei die Umgebungsinformationen Informationen über einen Abstand zwischen dem Sattelfahrzeug (100) und einem Zielfahrzeug umfassen, und
die Ausführungseinheit (62) die in dem Sattelfahrzeug (100) erzeugte Bremskraft im Fahrunterstützungsmodus basierend auf den Informationen über den Abstand zwischen dem Sattelfahrzeug (100) und dem Zielfahrzeug verstärkt.

11. Steuerverfahren zum Manövrieren eines Sattelfahrzeugs (100), wobei das Sattelfahrzeug (100) eine Bremsbetätigungseinheit (11, 13) und einen Detektor (45a, 45b) umfasst, wobei die Bremsbetätigungseinheit (11, 13) dazu ausgelegt ist, von einem Fahrer betätigt zu werden, wobei der Detektor (45a, 45b) dazu ausgelegt ist, eine Zustandsgröße der Bremsbetätigungseinheit (11, 13) während einer Betriebsbremsung zu detektieren, wobei das Steuerverfahren Folgendes umfasst:
Bestimmen, unter Verwendung einer Bestimmungseinheit (63) einer Steuerung (60), ob sich die
Bremsbetätigungseinheit (11, 13) in Betätigung befindet, basierend auf einer Ausgabe von dem Detektor (45a, 45b); und
Ausführen, unter Verwendung einer Ausführungseinheit (62) der Steuerung (60), eines Fahrunterstützungsmodus, wenn die Bestimmungseinheit (63) bestimmt, dass sich die Bremsbetätigungseinheit (11, 13) in Betätigung befindet, der Fahrunterstützungsmodus, bei dem eine in dem Sattelfahrzeug (100) erzeugte Bremskraft verstärkt wird, **dadurch gekennzeichnet ist, dass**
die Ausführungseinheit (62) im Fahrunterstützungsmodus:
die Bremskraft basierend auf Umgebungsinformationen verstärkt, die Informationen über die Umgebung um das Sattelfahrzeug (100) herum sind; und
basierend auf einem Grad einer Änderung der Ausgabe von dem Detektor (45a, 45b) einen Grad einer Reduzierung der Bremskraft am Ende der Verstärkung der in dem Sattelfahrzeug (100) erzeugten Bremskraft ändert.

## Revendications

1. Contrôleur (60), configuré pour manœuvrer un véhicule à selle (100), le véhicule à selle (100) comportant une unité d'opération de freinage (11, 13) et un détecteur (45a, 45b), l'unité d'opération de freinage (11, 13) étant configurée pour être actionnée par un conducteur, le détecteur (45a, 45b) étant configuré pour détecter une quantité d'état de l'unité d'opération de freinage (11, 13) au cours d'un freinage de service, le contrôleur comprenant :
une unité de détermination (63) configurée pour déterminer, sur la base d'une sortie du détecteur (45a, 45b), si l'unité d'opération de freinage (11, 13) est ou non en fonctionnement ; et
une unité d'exécution (62) configurée pour exécuter un mode d'assistance à la conduite lorsque l'unité de détermination (63) détermine que l'unité d'opération de freinage (11, 13) est en fonctionnement, le mode d'assistance à la conduite dans lequel une force de freinage produite dans le véhicule à selle (100) est amplifiée, **caractérisé en ce que**
l'unité d'exécution (62), dans le mode d'assistance à la conduite :
amplifie la force de freinage sur la base d'informations de milieu environnant, à savoir d'informations concernant l'environnement du véhicule à selle (100) ; et
modifie, sur la base d'un taux de variation de la sortie du détecteur (45a, 45b), un taux de réduction de la force de freinage à la fin de l'amplification de la force de freinage produite dans le véhicule à selle (100).

2. Contrôleur selon la revendication 1, dans lequel l'unité d'exécution (62), dans le mode d'assistance à la conduite, modifie le taux de réduction de la force de freinage à la fin de l'amplification de la force de freinage produite dans le véhicule à selle (100) sur la base d'une vitesse de véhicule du véhicule à selle (100) en plus du taux de variation de la sortie du détecteur (45a, 45b).

3. Contrôleur selon la revendication 2, dans lequel l'unité d'exécution (62), dans le mode d'assistance à la conduite, réduit le taux de réduction de la force de freinage à la fin de l'amplification de la force de freinage produite dans le véhicule à selle (100) lorsque la vitesse de véhicule est inférieure à une vitesse de véhicule de référence par rapport au cas où la vitesse de véhicule est supérieure à la vitesse de véhicule de référence.

4. Contrôleur selon l'une quelconque des revendications 1 à 3, dans lequel
l'unité d'exécution (62), dans le mode d'assistance à la conduite, modifie le taux de réduction de la force de freinage à la fin de l'amplification de la force de freinage produite dans le véhicule à selle (100) sur la base d'informations concernant une attitude de roulage du véhicule à selle (100) en plus du taux de variation de la sortie du détecteur (45a, 45b).

5. Contrôleur selon l'une quelconque des revendications 1 à 4, dans lequel
l'unité d'exécution (62), dans le mode d'assistance à la conduite, détermine d'une part le taux de réduction de la force de freinage produite dans une roue avant (3) du véhicule à selle (100) et d'autre part le taux de réduction de la force de freinage produite dans une roue arrière (4) du véhicule à selle (100) à la fin de l'amplification de la force de freinage produite dans le véhicule à selle (100).

6. Contrôleur selon la revendication 5, dans lequel l'unité d'exécution (62), dans le mode d'assistance à la conduite, augmente le taux de réduction de la force de freinage produite dans la roue arrière (4) à la fin de l'amplification de la force de freinage produite dans le véhicule à selle (100) par rapport au taux de réduction de la force de freinage produite dans la roue avant (3).

7. Contrôleur selon l'une quelconque des revendications 1 à 6, dans lequel
le détecteur (45a, 45b) détecte, en tant que quantité d'état, une pression de maître-cylindre, à savoir une pression d'un liquide de freinage d'un maître-cylindre (21a, 21b).

8. Contrôleur selon la revendication 7, dans lequel l'unité d'exécution (62), dans le mode d'assistance à la conduite, met fin à l'amplification de la force de freinage produite dans le véhicule à selle (100) lorsque la pression de maître-cylindre est inférieure à une pression de référence.

9. Contrôleur selon l'une quelconque des revendications 1 à 8, dans lequel
les information de milieu environnement comportent des informations de risque de collision concernant un risque de survenue d'une collision du véhicule à selle (100) et d'un objet, et
l'unité d'exécution (62) amplifie la force de freinage produite dans le véhicule à selle (100) dans le mode d'assistance à la conduite sur la base des informations de risque de collision.

10. Contrôleur selon l'une quelconque des revendications 1 à 8, dans lequel
les informations de milieu environnant comportent des informations concernant une distance entre le véhicule à selle (100) et un véhicule cible, et
l'unité d'exécution (62) amplifie la force de freinage produite dans le véhicule à selle (100) dans le mode d'assistance à la conduite sur la base des informations concernant la distance entre le véhicule à selle (100) et le véhicule cible.

11. Procédé de commande pour manœuvrer un véhicule à selle (100), le véhicule à selle (100) comportant une unité d'opération de freinage (11, 13) et un détecteur (45a, 45b), l'unité d'opération de freinage (11, 13) étant configurée pour être actionnée par un conducteur, le détecteur (45a, 45b) étant configuré pour détecter une quantité d'état de l'unité d'opération de freinage (11, 13) au cours d'un freinage de service, le procédé de commande comprenant :
la détermination, au moyen d'une unité de détermination (63) d'un contrôleur (60), si l'unité d'opération de freinage (11, 13) est ou non en fonctionnement, sur la base d'une sortie du détecteur (45a, 45b) ; et
l'exécution, au moyen d'une unité d'exécution (62) du contrôleur (60), d'un mode d'assistance à la conduite lorsque l'unité de détermination (63) détermine que l'unité d'opération de freinage (11, 13) est en fonctionnement, le mode d'assistance à la conduite dans lequel une force de freinage produite dans le véhicule à selle (100) est amplifiée, **caractérisé en ce que** l'unité d'exécution (62), dans le mode d'assistance à la conduite :
amplifie la force de freinage sur la base d'informations de milieu environnant, à savoir d'informations concernant l'environnement du véhicule à selle (100) ; et
modifie, sur la base d'un taux de variation de la sortie du détecteur (45a, 45b), un taux de réduction de la force de freinage à la fin de l'amplification de la force de freinage produite dans le véhicule à selle (100).
